Europäisches Patentamt

European Patent Office

Office européen des brevets

(11) Veröffentlichungsnummer: **0 263 963 B1**

## EUROPÄISCHE PATENTSCHRIFT

(45) Veröffentlichungstag der Patentschrift: **11.09.91**

(21) Anmeldenummer: **87112932.6**

(22) Anmeldetag: **04.09.87**

(51) Int. Cl.⁵: **B65D 65/40, B32B 27/32**

(54) **Bedruckbare und beidseitig siegelbare, biaxial orientierte opake Polyolefin-Mehrschichtfolie, ihre Herstellung und ihre Verwendung.**

(30) Priorität: **13.09.86 DE 3631231**

(43) Veröffentlichungstag der Anmeldung:
**20.04.88 Patentblatt 88/16**

(45) Bekanntmachung des Hinweises auf die
Patenterteilung:
**11.09.91 Patentblatt 91/37**

(84) Benannte Vertragsstaaten:
**BE DE ES FR GB IT NL**

(56) Entgegenhaltungen:
**EP-A- 0 201 799**
**US-A- 4 343 852**

(73) Patentinhaber: **HOECHST AKTIENGESELL-**
**SCHAFT**
**Postfach 80 03 20**
**W-6230 Frankfurt am Main 80(DE)**

(72) Erfinder: **Crass, Günther**
**Bachstrasse 7**
**W-6204 Taunusstein 4(DE)**
Erfinder: **Janocha, Siegfried, Dr.**
**Weinfeldstrasse 28**
**W-6200 Wiesbaden(DE)**
Erfinder: **Bothe, Lothar, Dr.**
**Am Heiligenhaus 9**
**W-6500 Mainz-Gonsenheim(DE)**

**Beschreibung**

Die Erfindung betrifft eine beidseitig siegelbare, biaxial orientierte opake Polyolefin-Mehrschichtfolie, bestehend aus einer Basisschicht und zwei Deckschichten, wobei die Basisschicht im wesentlichen aus einem Propylenpolymeren mit einem Zusatz eines anorganischen Pigments besteht. Die Erfindung betrifft ferner ein Verfahren zur Herstellung der Folie und ihre Verwendung.

Für viele Anwendungen, besonders zur Verpackung von Lebensmitteln, werden hinreichend lichtundurchlässige fettabstoßende und wasserdampfdichte Folien benötigt.

In schnellaufenden Verpackungsmaschinen wie z.B. den horizontalen Form-Füll-Schließ-Maschinen, insbesondere aber auch zum Verpacken von Schokoladenriegeln, werden Folien benötigt, die zum einen beidseitig siegelbar sind, zum anderen gute Gleiteigenschaften in schnellen Verpackungsmaschinen zeigen und darüber hinaus gute Bedruckbarkeit auch nach längerer Lagerung der Folie aufweisen.

Eine beidseitig siegelbare, biaxial orientierte Polyolefinfolie mit drei Schichten ist aus der US-A-4 419 411 bekannt. Bei dieser Folie ist in beiden Siegelschichten eine Additivkombination inkorporiert. Sie enthalten jeweils 0,15 bis 0,4 Gew.-% Polysiloxan und 0,05 bis 0,5 Gew.-% Siliciumdioxid, Gewichtsprozente jeweils bezogen auf die siegelbare Schicht. Die Basisschicht besteht aus Polypropylen (als Hauptkomponente) und enthält eine geringe Menge Monocarbonsäureamid. Ein Teil des Amids migriert von der Basisschicht in die beiden Siegelschichten und auf deren Oberfläche (äußere Fläche), so daß in jeder Siegelschicht Polysiloxan, Siliciumdioxid und Monocarbonsäureamid inkorporiert vorliegen und Monocarbonsäureamid auch auf den Außenflächen der beiden Siegelschichten anwesend ist. Die beschriebene Polyolefin-Mehrschichtfolie soll einen besonders niedrigen Reibungskoeffizienten aufweisen. Dieser Folie haftet jedoch insbesondere der Nachteil an, daß sie nicht bedruckbar ist.

Die EP-A-0 004 633 beschreibt eine opake Mehrschichtfolie, bestehend aus einer mit 5 bis 15 Gew.-% Pigment modifizierten Polypropylen-Basisschicht und mindestens einer Siegelschicht aus einem statistischen $C_2/C_3$-Copolymerisat. Bei der Streckorientierung reißt die Polymermatrix an den Korngrenzen der Pigmente auf; die dadurch entstehenden Hohlräume, die sogenannten Vakuolen, bewirken eine erhebliche Reduzierung der Dichte sowie eine durch sie bewirkte Opazität, die der gesamten Folie ein werbewirksames perlmuttartiges Aussehen verleiht.

Zur Verbesserung der Verarbeitbarkeit kann auch diese Mehrschichtfolie in ihrer Basisschicht, entsprechend der US-A-4 419 411, migrierende Gleitmittel wie z.B. Fettsäureester bzw. Fettsäureamide, die sich an der Oberfläche der Folie anreichern und dort einen Schmierfilm bilden, enthalten. Das Verarbeitungsverhalten der Folie in den beschriebenen schnellaufenden Verpackungsmaschinen wird zwar durch diese Schmierfilmbildung bei längerer Lagerzeit immer besser, die Druckfarbenhaftung reduziert sich aber gleichzeitig schon nach vier Wochen Lagerzeit in erheblichem Umfang.

Der Erfindung liegt demnach die Aufgabe zugrunde, eine biaxial orientierte und beidseitig siegelbare opake Polyolefinfolie aus drei Schichten zur Verfügung zu stellen, welche die oben erwähnten wichtigen Eigenschaften aufweist und darüber hinaus auch gut bedruckbar ist. Die neue Polyolefin-Mehrschichtfolie soll insbesondere eine gute beidseitige Siegelbarkeit, hervorragende Laufeigenschaften und eine gute Bedruckbarkeit aufweisen.

Gelöst wird diese Aufgabe durch Bereitstellen einer Polyolefin-Mehrschichtfolie der eingangs genannten Gattung, dadurch gekennzeichnet, daß

a) eine Oberflächenschicht im wesentlichen aus einem polyolefinischen Siegelrohstoff besteht und ein inkorporiertes Polydialkylsiloxan als Gleitmittel enthält und nicht coronabehandelt ist und

b) die gegenüberliegende Oberflächenschicht im wesentlichen aus einem polyolefinischen Siegelrohstoff besteht und Polydialkylsiloxan als Gleitmittel in einer relativen Belegung von höchstens 15, gemessen mit Hilfe der ESCA-Spektroskopie, an ihrer äußeren Oberfläche aufweist, wobei diese Oberflächenschicht vor Belegung mit Polydialkylsiloxan coronabehandelt wurde.

Die neue Polyolefinfolie beruht auf einer Reihe von erfinderischen Überlegungen und Handlungen. Indem bei einer der beiden Siegelschichten ein Polydialkylsiloxan nicht inkorporiert, sondern als Belag (auf ihrer äußeren Oberfläche) anwesend ist und diese Siegelschicht vor der Polydialkylsiloxanbelegung coronabehandelt worden ist, wird erreicht, daß die erfindungsgemäße Folie auf dieser Schicht bedruckbar ist und gleichzeitig auch all die anderen obengenannten wichtigen Eigenschaften besitzt. Die vorliegende Erfindung zeigt also einen Weg, mit dem es in einfacher Weise (nämlich durch Kontakt einer polydialkylsiloxaninkorporierten Siegelschicht mit der Außenfläche der anderen der beiden Siegelschichten) möglich ist, Coronabehandlung und Polydialkylsiloxananwesenheit in einer Siegelschicht zu kombinieren und die damit angestrebten Effekte (gute Bedruckbarkeit, gute Gleiteigenschaften und gute Siegelbarkeit) gemeinsam zu erreichen, ohne irgendwelche nachteilige Wirkungen auf weitere wichtige Eigenschaften in Kauf nehmen zu müssen.

Die Menge an Polydialkylsiloxan, die auf die Außenfläche einer Siegelschicht übertragen wird, stellt nur einen relativ kleinen Bruchteil des in der anderen Siegelschicht inkorporierten Polydialkylsiloxans dar. Die dem Olefinpolymeren einer Siegelschicht zugesetzte Polydialkylsiloxanmenge von 0,5 bis 3 Gew.-%, vorzugsweise 0,8 bis 2 Gew.-%, (Gewichtsprozente bezogen auf das Gesamtgewicht der Schicht) vermindert sich demnach durch die erwähnte Übertragung nicht wesentlich.

Die genannte Belegung mit Polydialkylsiloxan erfolgt durch Kontakt der beiden Siegelschichten. Kontakt der Siegelschichten liegt beispielsweise vor, wenn die Folie nach ihrer Herstellung bei der dann vorliegenden Temperatur (in der Regel etwa Raumtemperatur) aufgewickelt wird, weil dabei die beiden Siegelschichten unter enger gegenseitiger Berührung aufeinander zu liegen kommen. Die beabsichtigte Übertragung wird zusätzlich noch dadurch gefördert, daß die beiden Siegelschichten mit dem durch das Aufwickeln erzeugten Druck in Kontakt sind. Es hat sich herausgestellt, daß die Polydialkylsiloxan-Übertragung schon nach kurzer Zeit des Kontaktes stattfindet und die geforderte Belegung vorliegt.

Beträgt der Wert der mit Hilfe der ESCA-Spektroskopie (ESCA = Electron Spectroscopy for Chemical Analysis) gemessenen relativen Belegung der Außenfläche mehr als 15, liegt bereits derart viel Polydialkylsiloxan vor, daß sich beim Einsatz der Folie verfahrenstechnische Probleme ergeben könnten. Andererseits kann es bei sehr kleinen Werten zu einer Beeinträchtigung der Gleitfähigkeit der Folie kommen. Die relative Polydialkylsiloxan-Belegung beträgt demnach vorzugsweise 2 bis 10.

Das in einer der beiden Siegelschichten inkorporierte Polydialkylsiloxan weist Seitengruppen mit 1 bis 6 Kohlenstoffatomen auf und hat eine Viskosität von mindestens 100 mm²/s bei 25° C, vorzugsweise 1000 bis 100 000 mm²/s, insbesondere 5000 bis 50 000 mm²/s (der Viskositätsbereich von beispielsweise 1000 bis 100 000 mm²/s bei 25° C entspricht bei Polydimethylsiloxan einer mittleren Molmasse von etwa 25 000 bis 103 000). Als ganz besonders geeignet hat sich Polydimethylsiloxan erwiesen.

Die Basisschicht der erfindungsgemäßen Mehrschichtfolie besteht aus einem Propylenpolymeren, das zum überwiegenden Teil aus Propylen besteht und einen Schmelzpunkt von 140° C oder höher, vorzugsweise 150 bis 170° C, besitzt. Isotaktisches Polypropylen mit einem n-heptanlöslichen Anteil von 15 Gew.-% und weniger, Copolymere von Ethylen und Propylen mit einem Ethylengehalt von 10 Gew.-% oder weniger, Copolymere von Propylen mit C₄-C₈-Alpha-Olefinen mit einem Alpha-Olefin-Gehalt von 10 Gew.-% oder weniger stellen bevorzugte Propylenpolymere für die Basisschicht dar, wobei isotaktisches Polypropylen besonders bevorzugt ist.

Das Propylenpolymere der Basisschicht hat im allgemeinen einen Schmelzflußindex von 0,5 g/10 min bis 10 g/10 min, vorzugsweise 1,5 g/10 min bis 4 g/10 min, bei 230° C und 2,16 kp Belastung (DIN 53 735).

Die Basisschicht enthält ein mit dem Polymeren unverträgliches Additiv, insbesondere anorganische Teilchen wie Erdalkalicarbonate, vorzugsweise Calciumcarbonat, und/oder Siliciumdioxid, Titandioxid und Bariumsulfat. Diese Teilchen haben gewöhnlich einen mittleren Teilchendurchmesser von 2 bis 8 μm. Es kann aber ebenso vorteilhaft ein organisches unverträgliches Additiv in der Basisschicht dispergiert enthalten sein, vorzugsweise Polystyrol, Polymethylmethacrylat, Polytetrafluorethylen und/oder Copolymere dieser Verbindungen. Das unverträgliche Additiv wird zweckmäßigerweise in einer Konzentration von 5 bis 35 Gew.-%, insbesondere 10 bis 20 Gew.-%, bezogen auf die Basisschicht, verwendet.

Unverträglich bedeutet dabei, daß die polymere organische Komponente einen anderen Schmelzpunkt und/oder ein anderes natürliches Streckverhältnis als das Polypropylen aufweist, und daß es beim Streckprozeß zum Aufreißen der Polymermatrix und damit zur Vakuolenbildung kommt.

Der Polypropylenrohstoff enthält üblicherweise als Katalysatorrückstände Chloridreste. Da diese bei der Weiterverarbeitung störend wirken, enthalten technische Polypropylenrohstoffe zusätzlich sogenannte "Chloridfänger", insbesondere Calciumstearat. Mit dem Chlorid entsteht aus Calciumstearat freie Stearinsäure und Calciumchlorid. Freie Stearinsäure und Calciumstearat wirken sich aber für die Bedruckbarkeit einer Folie sehr nachteilig aus, da sie ähnlich wie die Fettsäureester und Fettsäureamide als migrierende Gleitmittel wirken.

Bei einem Einsatz von Calciumcarbonat als anorganisches Pigment erübrigt sich der Zusatz eines Chloridfängers, da es selbst als Salz einer schwachen Säure Chlorid binden kann.

In der bevorzugten Ausführungsform wird daher ein Polypropylenrohstoff eingesetzt, der als anorganisches Pigment Calciumcarbonat enthält und deshalb frei sein kann von migrierenden Chloridfängern.

Die Siegelschichten der erfindungsgemäßen Mehrschichtfolie bestehen aus siegelbaren olefinischen Polymeren. Geeignete Olefinpolymere sind Ethylenhomopolymere, Copolymere aus Ethylen und Propylen, Ethylen oder Propylen und Butylen oder einem anderen Alpha-Olefin mit 5 bis 10 Kohlenstoffatomen, Terpolymere aus Ethylen, Propylen und Butylen oder einem anderen Alpha-Olefin mit 5 bis 10 Kohlenstoffatomen oder Mischungen aus diesen Polymeren.
Ethylen-Propylen-Copolymere, Ethylen-Butylen-Copolymere, Propylen-Butylen-Copolymere, Ethylen-Propylen-Butylen-Terpolymere oder Mischungen aus diesen Polymeren werden bevorzugt eingesetzt.

3

Besonders bevorzugte Olefinpolymere für die Siegelschichten sind Ethylen-Propylen-Copolymere mit Propylen als Hauptkomponente und einem Ethylengehalt von 2 bis 10 Gew.-% (bezogen auf das Copolymere), Propylen-Butylen-Copolymere mit Propylen als Hauptkomponente und einem Butylengehalt von 0,5 bis 25 Gew.-% (bezogen auf das Copolymere) und Ethylen-Propylen-Butylen-Terpolymere mit Propylen als Hauptkomponente, 0,5 bis 7 Gew.-% Ethylen und 5 bis 30 Gew.-% Butylen (Gewichtsprozent bezogen auf das Terpolymere) sowie Mischungen aus diesen Polymeren.

Das Olefinpolymere der Siegelschichten hat einen niedrigeren Schmelzpunkt als das Propylenpolymere der Basisschicht. Der Schmelzpunkt des Olefinpolymeren liegt im allgemeinen im Bereich von 80 bis 160°C, vorzugsweise 100 bis 140°C.

Der Schmelzflußindex des Olefinpolymeren liegt höher als jener des Propylenpolymeren der Basisschicht. Das Olefinpolymere für die Siegelschichten hat einen Schmelzflußindex von im allgemeinen 1 bis 12 g/10 min, vorzugsweise 3 bis 9 g/10 min, bei 230°C und 2,16 kp Belastung (DIN 53 735).

Zur Coronabehandlung, die nach einer der bekannten Methoden durchgeführt werden kann, wird zweckmäßigerweise so vorgegangen, daß die Folie zwischen zwei als Elektroden dienenden Leiterelementen hindurchgeführt wird, wobei zwischen den Elektroden eine so hohe Spannung, meist Wechselspannung (etwa 10 000 V und 10 000 Hz) angelegt ist, daß Sprüh- oder Coronaentladungen stattfinden können. Durch die Sprüh-oder Coronaentladungen wird die Luft oberhalb der Folienoberfläche ionisiert und verbindet sich mit den Molekülen auf der Folienoberfläche, so daß polare Einlagerungen in der im wesentlichen unpolaren Polymermatrix entstehen. Erfindungsgemäß wird nur jene der beiden Siegelschichten coronabehandelt, bei der das Olefinpolymere kein Polydialkylsiloxan enthält, das ist die nicht polydialkylsiloxan-inkorporierte Siegelschicht.

Um bestimmte Eigenschaften der erfindungsgemäßen Polyolefinfolie noch weiter zu verbessern, können sowohl die Basisschicht als auch die beiden Siegelschichten entsprechende Zusätze in einer jeweils wirksamen Menge enthalten, vorzugsweise Antistatika, Antiblockmittel, Gleitmittel, Stabilisatoren und/oder niedrigmolekulare Harze, die mit dem Polymeren der Basisschicht und der Siegelschichten verträglich sind.

Bevorzugte Antistatika sind Alkali-alkansulfonate, polyethermodifizierte, das sind ethoxylierte und/oder propoxylierte Polydialkylsiloxane und/oder die im wesentlichen geradkettigen und gesättigten aliphatischen, tertiären Amine mit einem aliphatischen Rest mit 10 bis 20 Kohlenstoffatomen, die mit 2 Hydroxyalkyl-($C_1$-$C_4$)-Gruppen substituiert sind, worunter N,N-bis-(2-hydroxyethyl)-alkylamine mit $C_{10}$-$C_{20}$, vorzugsweise $C_{12}$-$C_{18}$ als Alkylgruppen besonders geeignet sind. Die wirksame Menge an Antistatikum liegt im Bereich von 0,05 bis 3 Gew.-%, bezogen auf die Schicht. Im Falle des Einsatzes von polyethermodifiziertem Polysiloxan wird dieses nur dem Polymeren für die Basisschicht und/oder dem Polymeren jener der beiden Siegelschichten zugesetzt, die als polydialkylsiloxan-inkorporierte Schicht vorgesehen ist.

Geeignete Antiblockmittel sind anorganische Zusatzstoffe wie Siliciumdioxid, Calciumcarbonat, Magnesiumsilicat, Aluminiumsilicat, Calciumphosphat und dergleichen, nicht ionogene Tenside, anionaktive Tenside und/oder unverträgliche organische Polymerisate wie Polyamide, Polyester, Polycarbonate und dergleichen. Die wirksame Menge an Antiblockmittel liegt im Bereich von 0,1 bis 2 Gew.%, bezogen auf die Schicht.

Als Stabilisatoren können die üblichen stabilisierend wirkenden Verbindungen für Ethylen-, Propylen- und andere Alpha-Olefinpolymere eingesetzt werden. Die wirksame Menge beträgt im allgemeinen 0,1 bis 2 Gew.-%, bezogen auf die Schicht.

Bei dem empfohlenen niedrigmolekularen Harz handelt es sich um ein natürliches oder synthetisches Harz mit einem Erweichungspunkt von 60 bis 180°C, vorzugsweise 80 bis 130°C (bestimmt nach DIN 1995-U 4). Unter den zahlreichen niedrigmolekularen Harzen sind die Kohlenwasserstoffharze bevorzugt, und zwar in Form der Erdölharze (Petroleumharze), Styrolharze, Cyclopentadienharze und Terpenharze (diese Harze sind in Ullmanns Enzyklopädie der Techn. Chemie, 4. Auflage, Band 2, Seiten 539 bis 553, beschrieben).

Die Erdölharze sind solche Kohlenwasserstoffharze, die durch Polymerisation von tiefzersetzten (deep-decomposed) Erdölmaterialien in Gegenwart eines Katalysators hergestellt werden. Diese Erdölmaterialien enthalten gewöhnlich ein Gemisch von harzbildenden Substanzen wie Styrol, Methylstyrol, Vinyltoluol, Inden, Methylinden, Butadien, Isopren, Piperylen und Pentylen. Die Styrolharze sind niedrigmolekulare Homopolymere von Styrol oder Copolymere von Styrol mit anderen Monomeren wie Alpha-Methylstyrol, Vinyltoluol und Butadien. Die Cyclopentadienharze sind Cyclopentadienhomopolymere oder Cyclopentadiencopolymere, die aus Kohlenteerdestillaten und zerlegtem Erdölgas erhalten werden. Diese Harze werden hergestellt, indem die Materialien, die Cyclopentadien enthalten, während einer sehr langen Zeit bei hoher Temperatur gehalten werden. In Abhängigkeit von der Reaktionstemperatur können Dimere, Trimere oder Hochpolymere erhalten werden. Die Terpenharze sind Polymerisate von Terpenen, d.h. Kohlenwasserstoffen der Formel $C_{10}H_{16}$, die in fast allen etherischen Ölen und ölhaltigen Harzen von Pflanzen enthalten sind, und phenolmodifizierte Terpenharze. Als spezielle Beispiele der Terpene sind Alpha-Pinen, ß-Pinen, Dipenten, Limonen, Myrcen, Bornylen, Camphen und ähnliche Terpene zu nennen. Bei den Kohlenwasserstoffharzen kann es sich auch um die sogenannten modifizierten Kohlenwasserstoffharze handeln. Die Modifizierung erfolgt im allgemeinen durch Reaktion der Rohstoffe vor der Polymerisation, durch Einführung spezieller Monomerer oder durch Reaktion des polymerisierten Produktes, wobei insbesondere Hydrierungen oder Teilhydrierungen vorgenommen werden.

Als Kohlenwasserstoffharze werden vorzugsweise Styrolhomopolymerisate, Styrolcopolymerisate, Cyclopentadienhomopolymerisate, Cyclopentadiencopolymerisate und/oder Terpenpolymerisate mit einem Erweichungspunkt von jeweils 60 bis 180° C, vorzugsweise 80 bis 130° C, eingesetzt (bei den ungesättigten Polymerisaten ist das hydrierte Produkt bevorzugt).

Die wirksame Menge an niedermolekularem Harz beträgt 3 bis 15 Gew.-%, vorzugsweise 5 bis 10 Gew.-%, bezogen auf die Schicht.

Es hat sich als besonders vorteilhaft herausgestellt, das niedrigmolekulare Harz mit einem Propylenhomopolymeren mit einem Schmelzpunkt von bis zu 165° C, vorzugsweise mit einem isotaktischen Polypropylen, in einer Menge von 3 bis 15 Gew.-%, vorzugsweise 5 bis 10 Gew.-%, bezogen auf die Schicht, zu kombinieren, wobei das Harz und das Propylenhomopolymere vorzugsweise in einer jeweils etwa gleichen Menge eingesetzt wird.

Nach einer bevorzugten Ausführungsform der erfindungsgemäßen Polyolefin-Mehrschichtfolie enthält mindestens eine Siegelschicht 3 bis 15 Gew.-%, vorzugsweise 5 bis 10 Gew.-%, von den genannten natürlichen oder synthetischen Harzen mit einem Erweichungspunkt von 80 bis 130° C und 3 bis 15 Gew.-%, vorzugsweise 5 bis 10 Gew.-%, von einem Propylenhomopolymeren mit einem Schmelzpunkt von bis zu 165° C, Gewichtsprozente bezogen auf die Schichten.

Nach einer weiteren bevorzugten Ausführungsform enthält die Basisschicht (in der die Hauptkomponente ein Propylenhomopolymeres ist) und/oder mindestens eine Siegelschicht ein N,N-bis-(2-hydroxyethyl)-(C$_{10}$-C$_{20}$)-alkylamin.

Es ist selbstverständlich, daß die beiden Siegelschichten der erfindungsgemäßen Polyolefinfolie prinzipiell aus gleichen oder auch aus unterschiedlichen Polymeren zusammengesetzt sein können.
Sofern es zweckmäßig ist, enthalten die Basisschicht und/oder die Siegelschichten auch die anderen oben erwähnten Zusätze, vorzugsweise Gleitmittel und Antiblockmittel, in einer jeweils wirksamen Menge.

Die Dicke der erfindungsgemäßen Polyolefin-Mehrschichtfolie kann innerhalb weiter Grenzen variieren und richtet sich insbesondere nach dem beabsichtigten Einsatz. Ihre Gesamtdicke beträgt im allgemeinen 15 bis 60 μm, vorzugsweise 20 bis 50 μm, wobei die Siegelschichten, die im allgemeinen die gleiche Dicke haben, jeweils 0,2 bis 2 μm, vorzugsweise 0,4 bis 1,0 μm, dick sind (die Dicke der Basisschicht macht etwa 50 bis 90% der Gesamtdicke aus).

Die Herstellung der erfindungsgemäßen aus drei Schichten gebildeten Polyolefinfolie erfolgt nach dem bekannten Coextrusionsverfahren. Im Rahmen dieses Verfahrens wird so vorgegangen, daß die den einzelnen Schichten der Folie entsprechenden Schmelzen durch eine Flachdüse coextrudiert werden, die durch Coextrusion erhaltene Folie zur Verfestigung abgekühlt wird, die Folie biaxial gestreckt (orientiert), die biaxial gestreckte Folie thermofixiert und an der (zur Coronabehandlung) vorgesehenen Siegelschicht coronabehandelt wird. Die biaxiale Streckung (Orientierung) kann simultan oder aufeinanderfolgend durchgeführt werden, wobei die aufeinanderfolgende biaxiale Streckung, bei der zuerst längs (das ist in Maschinenrichtung) und dann quer (das ist quer zur Maschinenrichtung) gestreckt wird, bevorzugt ist. Zunächst wird also wie beim üblichen Coextrusionsverfahren das Polymere oder die Polymermischung der einzelnen Schichten in einem Extruder komprimiert oder verflüssigt. Die Schmelzen werden dann gleichzeitig durch eine Flachdüse (Breitschlitzdüse) gepreßt, und die ausgepreßte mehrschichtige Folie wird auf einer oder mehreren Walzen, die durch Kühlung auf etwa 30 bis 50° C gehalten werden, abgekühlt und verfestigt. Die so erhaltene Folie wird dann längs und quer zur Extrusionsrichtung gestreckt, was zu einer Orientierung der Molekülketten führt. In Längsrichtung wird vorzugsweise 4 bis 7 : 1 und in Querrichtung vorzugsweise 8 bis 10 : 1 gestreckt. Die Längsstreckung wird bei einer Folientemperatur von vorzugsweise 120 bis 140° C durchgeführt und die Querstreckung vorzugsweise bei 160 bis 175° C. Das Längsstrecken wird man zweckmäßigerweise mit Hilfe zweier entsprechend dem angestrebten Streckverhältnis verschieden schnellaufender Walzen durchführen und das Querstrecken mit Hilfe eines entsprechenden Kluppenrahmens. Durch die Längsstreckung wird eine Vakuolenstruktur erzeugt, die zu dem perl-muttartigen Glanz der Folienoberfläche führt. Dabei muß das spezifische Gewicht der Mehrschichtfolie auf unter 90%, vorzugsweise 50 bis 80%, des spezifischen Gewichts der Mehrschichtfolie vor dem Verstrecken absinken und erreicht Werte von gleich oder kleiner als 0,80g/cm$^3$, insbesondere Werte von 0,5 bis 0,75g/cm$^3$.

An die biaxiale Streckung der Folie schließt sich ihre Thermofixierung (Wärmebehandlung) an. Dabei wird die Folie etwa 0,5 bis 10 s lang bei einer Temperatur von 150 bis 160° C gehalten. Die Coronabehand-

EP 0 263 963 B1

lung erfolgt vorzugsweise mit einer Wechselspannung von etwa 10 000 V und 10 000 Hz. Die so hergestellte Folie wird in üblicher Weise mit Hilfe einer Aufwickeleinrichtung aufgewickelt.

Die erfindungsgemäße Polyolefin-Mehrschichtfolie eignet sich insbesondere als Verpackungsfolie auf schnellau-fenden Verpackungsmaschinen. Sie besitzt nämlich all die wichtigen Eigenschaften, die von Polyolefinfolien im Hinblick auf den Einsatz auf schnellaufenden Maschinen gefordert werden. Sie weist insbesondere eine beidseitige Siegelbarkeit, hervorragende Laufeigenschaften und gleichzeitig eine gute Bedruckbarkeit auf, die auch noch nach vierwöchiger Lagerzeit unverändert gut ist.

Die Folie eignet sich wegen ihres werbewirksamen Aussehens besonders vorteilhaft zur Herstellung von undurchsichtigen Verpackungen, insbesondere für lichtempfindliche Nahrungsmittel. Sie kann jedoch auch für andere Verwendungszwecke eingesetzt werden, bei denen opake heißsiegelbare Kunststoffolien mit perlmuttartigem Glanz benötigt werden.

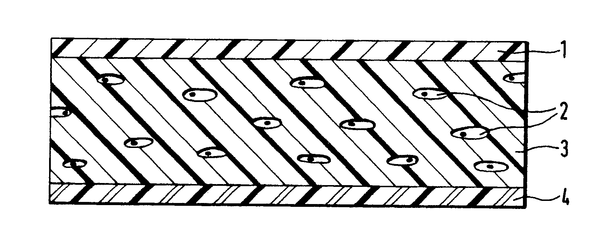

Die Erfindung wird an den folgenden Beispielen und an der Figur näher erläutert, ohne jedoch darauf beschränkt werden zu sollen.

In den nachstehenden Beispielen und Vergleichsbeispielen handelt es sich jeweils um eine biaxial orientierte (Längsstreckverhältnis 5 : 1, Querstreckverhältnis 10 : 1) Polyolefinfolie mit einer Basisschicht und zwei Siegelschichten, wobei die Basisschicht aus einem isotaktischen Polypropylen mit einem n-heptanlöslichen Anteil von 5 Gew.-%, mit einem Schmelzpunkt von 165°C und einem Schmelzflußindex von 2g/10min bei 230°C und 2,16 kp Belastung (DIN 53 735) als Hauptkomponente besteht. Sie enthält 8 Gew.-% fein verteilte Calciumcarbonatteilchen einer mittleren Teilchengröße von 2,4 μm. Die Basisschicht ist etwa 19 μm dick, und die beiden Siegelschichten, welche die Basisschicht umgeben, sind jeweils etwa 1 μm dick. Die dreischichtigen Polyolefinfolien sind nach dem bekannten Coextrusionsverfahren hergestellt worden.

Beispiel 1

Eine Siegelschicht besteht aus einem (statistischen) Ethylen-Propylen-Copolymeren mit 4,5 Gew.-% Ethylen, dem 0,8 Gew.-% Polydimethylsiloxan mit einer Viskosität von 30 000mm²/s bei 25°C zugesetzt worden ist. Diese Siegelschicht ist also aus 99,2 Gew.-% von dem genannten Copolymeren (aus 95,5 Gew.-% Propylen und 4,5 Gew.-% Ethylen) und 0,8 Gew.-% von dem genannten Polysiloxan gebildet. Die andere Siegelschicht besteht aus dem gleichen Ethylen-Propylen-Copolymeren und enthält kein Polysiloxan inkorporiert. Diese Siegelschicht ist coronabehandelt worden. Nach der Herstellung und Aufwicklung der dreischichtigen Polyolefinfolie ist auf der coronabehandelten Siegelschicht mit Hilfe der ESCA-Spektroskopie eine relative Polydimethylsiloxan-Belegung von 4 gemessen worden.

Vergleichsbeispiel 1

Es wurden Siegelschichten entsprechend dem Beispiel der EP-B-0 004 633 eingesetzt, d.h. ohne Gleitmittelzusatz.

Vergleichsbeispiel 2

Es wurden Siegelschichten entsprechend dem Beispiel der EP-B-0 004 633 eingesetzt, d.h. ohne Gleitmittelzusatz. Die Basisschicht enthält neben 8 Gew.-% Calciumcarbonat noch 0,5 Gew.-% Stearinsäureamid als migrierendes Gleitmittel.

Vergleichsbeispiel 3

Es wurden Siegelschichten entsprechend dem Beispiel der EP-B-0 004 633 eingesetzt, jedoch jeweils mit einem Gehalt von 0,5 Gew.-% an Polydimethylsiloxan.

Vergleichsbeispiel 4

Es wurden Siegelschichten entsprechend dem Beispiel der EP-B-0 004 633 eingesetzt, jedoch ohne Gleitmittelzusatz. Dafür wurde dem Polymeren der Basisschicht Polydimethylsiloxan in einer Menge von 0,8 Gew.-%, bezogen auf das Gesamtgewicht der Basisschicht, zugesetzt.

Bestimmung der relativen Polydialkylsiloxan-Belegung Die relative Polydialkylsiloxan-Belegung der Oberfläche der coronabehandelten Siegelschicht wurde mit Hilfe der ESCA-Spektroskopie bestimmt (ESCA = Electron Spectroscopy for Chemical Analysis). Bei der ESCA-Spektroskopie handelt es sich um eine

6

oberflächenspezifische Analysenmethode, wobei die kinetische Energie der Elektronen gemessen wird, die eine Oberfläche unter dem Einfluß von Röntgenstrahlen emittiert. Die Bestimmung erfolgte mit Proben der fertigen in üblicher Weise aufgewickelten Folie, nachdem sie im aufgewickelten Zustand bei Raumtemperatur mindestens 60 min lang gelegen hatte. Die Linien des ESCA-Spektrums werden nach den emittierten Energie-Niveaus benannt. Die Fläche unter einer ESCA-Linie ist der Konzentration des entsprechenden Elementes auf der Oberfläche proportional. Aus der Angabe des Flächenverhältnisses der $Si2p_{3/2}$-Linie zur $Cls_{1/2}$-Linie ergibt sich demnach die relative Polydialkylsiloxan-Belegung der Oberfläche (RSO) mit:

$$RSO = 40 \; \frac{F_{Si2p_{3/2}}}{F_{Cls_{1/2}}}$$

wobei $FSi2p_{3/2}$ die Fläche unter der $Si2p_{3/2}$-Linie und $FCls_{1/2}$ die Fläche unter der $Cls_{1/2}$-Linie ist. Bei dem Faktor 40 handelt es sich um einen relativen Signalintensitätsfaktor.

Die Messungen wurden mit dem ESCA-Gerät "ESCA 36 Photoelectron-Spektrometer" der Firma McPherson, USA, durchgeführt.

Bestimmung der Siegelfestigkeit

Zwei 15 mm breite Streifen wurden übereinandergelegt und bei 130 ° C, einer Siegelzeit von 0,1 s und einem Siegeldruck von 0,15 bar versiegelt. Die Siegelfestigkeit wurde nach der T-Peel-Methode bestimmt.

In der nachstehenden Tabelle sind die Eigenschaften der dreischichtigen Polyolefinfolien der Beispiele und Vergleichsbeispiele zusammengefaßt.

Wie die Ergebnisse zeigen sind die erfindungsgemäßen dreischichtigen Polyolefinfolien jenen des Standes der Technik deutlich überlegen. Nur die erfindungsgemäßen Folien erfüllen die hohen Forderungen bezüglich beidseitiger Siegelbarkeit und Laufeigenschaften (Maschinengängigkeit) bei gleichzeitig guter Bedruckbarkeit und zeichnen sich somit durch universelle Brauchbarkeit auf schnellaufenden Verpackungsmaschinen aus.

In der Tabelle bedeuten

+ + sehr gut,

+ gut,

+ - ausreichend,

- schlecht,

-- sehr schlecht.

Die Seiten 1 und 2 stehen für die siegelfähigen Oberflächen, wobei Seite 1 coronabehandelt ist, Seite 2 hingegen nicht.

In der Figur steht 1 für die coronabehandelte Oberflächenschicht, bestehend aus einem polyolefinischen Siegelrohstoff ohne Gleitmittel, 2 für die Vakuolen, 3 für die Basisschicht, 4 für die nicht coronabehandelte Oberflächenschicht, bestehend aus einem polydialkylsiloxanmodifizierten, polyolefinischen Siegelrohstoff.

EP 0 263 963 B1

## Tabelle

| | Siegelbarkeit | | Bedruckbarkeit nach 4 Wochen Lagerzeit, Seite 1 | Maschinen- gängigkeit auf Verpak- kungsmasch. |
|---|---|---|---|---|
| | Seite 1 | Seite 2 | | |
| Beispiel | ++ | ++ | ++ | ++ |
| Vergleichs- beispiel 1 | ++ | ++ | ++ | +- |
| Vergleichs- beispiel 2 | ++ | ++ | - | + |
| Vergleichs- beispiel 3 | -- | ++ | + | -- |
| Vergleichs- beispiel 4x | ++ | ++ | ++ | -- |

x Die mit Hilfe der ESCA-Spektroskopie bestimmte relative Siloxanbelegung der Oberfläche nach 2 Wochen Lagerung wird mit 0 gemessen.

**Patentansprüche**

1. Beidseitig siegelbare, biaxial orientierte opake Polyolefin-Mehrschichtfolie, bestehend aus einer Basisschicht und zwei Deckschichten, wobei die Basisschicht im wesentlichen aus einem Propylenpolymeren mit einem Zusatz eines anorganischen Pigments besteht, dadurch gekennzeichnet, daß
   a) eine Oberflächenschicht im wesentlichen aus einem polyolefinischen Siegelrohstoff besteht und ein inkorporiertes Polydialkylsiloxan als Gleitmittel enthält und nicht coronabehandelt ist und
   b) die gegenüberliegende Oberflächenschicht im wesentlichen aus einem polyolefinischen Siegelrohstoff besteht und Polydialkylsiloxan als Gleitmittel in einer relativen Belegung von höchstens 15, gemessen mit Hilfe der ESCA-Spektroskopie, an ihrer äußeren Oberfläche aufweist, wobei diese Oberflächenschicht vor Belegung mit Polydialkylsiloxan coronabehandelt wurde.

2. Polyolefinfolie nach Anspruch 1, dadurch gekennzeichnet, daß die Basisschicht als anorganisches Pigment ein Silikat, ein Erdalkalicarbonat, insbesondere Calciumcarbonat, Titandioxid, Bariumsulfat oder Mischungen daraus in einem Gehalt von 5 bis 35 Gew.-% enthält.

3. Polyolefinfolie nach den Ansprüchen 1 und 2, dadurch gekennzeichnet, daß die Basisschicht keine migrierenden Chloridfänger wie z.B. Calciumstearat enthält.

4. Polyolefinfolie nach einem oder mehreren der Ansprüche 1 bis 3, dadurch gekennzeichnet, daß die Menge an inkorporiertem Polydialkylsiloxan 0,5 bis 3 Gew.-%, bevorzugt 0,8 bis 2 Gew.-%, beträgt.

5. Polyolefinfolie nach einem oder mehreren der Ansprüche 1 bis 4, dadurch gekennzeichnet, daß die relative Polydialkylsiloxan-Belegung 2 bis 10 beträgt.

6. Polyolefinfolie nach einem oder mehreren der Ansprüche 1 bis 5, dadurch gekennzeichnet, daß das Polydialkylsiloxan ein Polydimethylsiloxan mit einer Viskosität von 1000 bis 100 000 mm$^2$/s bei 25 °C ist.

7. Polyolefinfolie nach einem oder mehreren der Ansprüche 1 bis 3, dadurch gekenzeichnet, daß das Olefinpolymere der Siegelschichten ein Ethylen-Propylen-Copolymeres, Ethylen-Butylen-Copolymeres, Propylen-Butylen-Copolymeres, Ethylen-propylen-Butylen-Terpolymeres oder eine Mischung aus zwei oder mehreren dieser Polymere ist.

**8.** Polyolefinfolie nach einem oder mehreren der Ansprüche 1 bis 7, dadurch gekennzeichnet, daß mindestens eine Siegelschicht 3 bis 15 Gew.-% von einem natürlichen oder synthetischen Harz mit einem Erweichungspunkt von 80 bis 130°C und 3 bis 15 Gew.-% von einem Propylenhomopolymer mit einem Schmelzpunkt von bis zu 165°C enthält, Gewichtsprozente bezogen auf die Schicht.

**9.** Polyolefinfolie nach einem oder mehreren der Ansprüche 1 bis 8, dadurch gekennzeichnet, daß ihre Dicke 15 bis 60 $\mu$m beträgt, wobei die Siegelschichten jeweils 0,3 bis 2 $\mu$m dick sind.

**10.** Polyolefinfolie nach einem oder mehreren der Ansprüche 1 bis 9, dadurch gekennzeichnet, daß ihr spezifisches Gewicht kleiner als 0,8 g/cm$^3$ ist.

**11.** Verfahren zur Herstellung der Polyolefinfolie nach Anspruch 1, dadurch gekennzeichnet, daß die den einzelnen Schichten der Folie entsprechenden Schmelzen durch eine Flachdüse coextrudiert werden, die coextrudierte Folie zur Verfestigung abgekühlt wird, die Folie biaxial gestreckt wird mit einem Längsstreckverhältnis von 4 bis 7 : 1 und einem Querstreckverhältnis von 8 bis 10 : 1, die biaxial gestreckte Folie thermofixiert, auf der Oberflächenseite, die kein inkorporiertes Polydialkylsiloxan enthält, coronabehandelt wird und anschließend aufgewickelt wird, wobei die Belegung an Polydialkylsiloxan an der äußeren Oberfläche, die kein inkorporiertes Polydialkylsiloxan enthält, beim Kontakt der beiden Siegelschichten entsteht.

**12.** Verwendung der Polyolefinfolie nach den Ansprüchen 1 bis 10 als Verpackungsfolie auf schnellaufenden Verpackungsmaschinen.

**Claims**

**1.** Biaxially oriented opaque polyolefin multi-layer film which can be sealed on both sides and comprises a base layer and two top layers, the base layer being composed essentially of a propylene polymer with an addition of an inorganic pigment, wherein

a) one surface layer essentially comprises a polyolefinic sealable raw material and contains, in incorporated form, a polydialkylsiloxane as a lubricant and has not been subjected to corona treatment and

b) the opposite surface layer essentially comprises a polyolefinic sealable raw material and has, on its outer surface, polydialkylsiloxane as a lubricant, in a relative occupancy of not more than 15, as determined with the aid of ESCA spectroscopy, this surface layer having been corona-treated prior to effecting occupancy with polydialkylsiloxane.

**2.** A polyolefin film as claimed in claim 1, wherein the inorganic pigment contained in the base layer comprises a silicate, an alkaline earth metal carbonate, in particular calcium carbonate, titanium dioxide, barium sulfate or mixtures thereof, in a concentration of from 5 to 35 % by weight.

**3.** A polyolefin film as claimed in claims 1 and 2, wherein the base layer does not contain any migrating chloride scavengers such as, for example, calcium stearate.

**4.** A polyolefin film as claimed in any one or several of claims 1 to 3, wherein the amount of incorporated polydialkylsiloxane is from 0.5 to 3 % by weight, preferably from 0.8 to 2 % by weight.

**5.** A polyolefin film as claimed in any one or several of claims 1 to 4, wherein the relative polydialkylsiloxane occupancy is from 2 to 10.

**6.** A polyolefin film as claimed in any one or several of claims 1 to 5, wherein the polydialkylsiloxane is a polydimethylsiloxane having a viscosity of from 1,000 to 100,000 mm$^2$/s at 25 °C.

**7.** A polyolefin film as claimed in any one or several of claims 1 to 3, wherein the olefin polymer of the sealing layers is an ethylene/propylene copolymer, an ethylene/butylene copolymer, a propylene/butylene copolymer, an ethylene/propylene/butylene terpolymer or a mixture of at least two of these polymers.

**8.** A polyolefin film as claimed in any one or several of claims 1 to 7, wherein at least one sealing layer contains from 3 to 15 % by weight of a natural or synthetic resin having a softening point of from 80 to 130 °C and from 3 to 15 % by weight of a propylene homopolymer having a melting point of up to 165 °C, percentages by weight relative to the layer.

9. A polyolefin film as claimed in any one or several of claims 1 to 8, which has a thickness of from 15 to 60 µm, each sealing layer being from 0.3 to 2 µm thick.

10. A polyolefin film as claimed in any one or several of claims 1 to 9, which has a specific gravity of less than 0.8 g/cm³.

11. A process for the production of the polyolefin film as claimed in claim 1, wherein the melts corresponding to the individual layers of the film are coextruded through a flat die, the coextruded film is cooled to solidify it, the film is biaxially stretched in a longitudinal stretching ratio of from 4:1 to 7:1 and in a transverse stretching ratio of from 8:1 to 10:1, the biaxially stretched film is heat-set, corona-treated on the surface which does not contain any incorporated polydialkylsiloxane and then wound up, the occupancy with polydialkylsiloxane at the outer surface which does not contain any incorporated polydialkylsiloxane being effected on contact between the two sealing layers.

12. Use of the polyolefin film as claimed in claims 1 to 10, as a packaging film in high-speed packaging machines.

**Revendications**

1. Pellicule multicouche à base de polyoléfine, opaque, orientée biaxialement, soudable des deux côtés, constituée d'une couche de base et de deux couches de recouvrement, la couche de base étant essentiellement constituée d'un polymère de propylène avec une addition d'un pigment minéral, caractérisée en ce que
   a) une couche superficielle est essentiellement constituée d'une matière première polyoléfinique de soudage et contient en tant que lubrifiant un polydialkylsiloxane incorporé, et n'est pas traitée par effet couronne, et
   b) la couche superficielle opposée est essentiellement constituée d'une matière première polyoléfinique de soudage et présente sur sa face externe un polydialkylsiloxane en tant que lubrifiant, en un recouvrement relatif, mesuré à l'aide de la spectroscopie ESCA (spectroscopie électronique pour analyse chimique) de 15 au maximum, cette couche superficielle étant traitée par effet couronne avant le recouvrement par le polydialkylsiloxane.

2. Pellicule à base de polyoléfine selon la revendication 1, caractérisée en ce que la couche de base contient en tant que pigment minéral un silicate, un carbonate alcalinoterreux, en particulier du carbonate de calcium, du dioxyde de titane, du sulfate de baryum ou des mélanges de ceux-ci, en une proportion de 5 à 35 % en poids.

3. Pellicule à base de polyoléfine selon les revendications 1 et 2, caractérisée en ce que la couche de base ne contient pas de fixateur de chlorure migrant, comme par exemple le stéarate de calcium.

4. Pellicule à base de polyoléfine selon une ou plusieurs des revendications 1 à 3, caractérisée en ce que la quantité de polydialkylsiloxane incorporé va de 0,5 à 3 % en poids, de préférence de 0,8 à 2 % en poids.

5. Pellicule à base de polyoléfine selon une ou plusieurs des revendications 1 à 4, caractérisée en ce que le recouvrement relatif par le polydialkylsiloxane va de 2 à 10.

6. Pellicule à base de polyoléfine selon une ou plusieurs des revendications 1 à 5, caractérisée en ce que le polydialkylsiloxane est un polydiméthylsiloxane ayant une viscosité de 1 000 à 100 000 mm/s à 25 °C.

7. Pellicule à base de polyoléfine selon une ou plusieurs des revendications 1 à 3, caractérisée en ce que le polymère oléfinique des couches de soudure est un copolymère éthylène/propylène, un copolymère éthylène/butylène, un copolymère propylène/butylène, un terpolymère éthylène/ propylène/butylène ou un mélange de deux de ces polymères et plus.

8. Pellicule à base de polyoléfine selon une ou plusieurs des revendications 1 à 7, caractérisée en ce qu au moins une couche de soudure contient de 3 à 15 % en poids d'une résine naturelle ou synthétique ayant un point de ramollissement de 80 à 130° C, et de 3 à 15 % en poids d'un homopolymère de propylène ayant un point de fusion allant jusqu'à 165° C, les pourcentages en poids étant par rapport à la couche.

9. Pellicule à base de polyoléfine selon une ou plusieurs des revendications 1 à 8, caractérisée en ce que son épaisseur va de 15 à 60 μm, les couches de soudure ayant chacune une épaisseur de 0,3 à 2 μm.

10. Pellicule à base de polyoléfine selon une ou plusieurs des revendications 1 à 9, caractérisée en ce que sa masse spécifique est inférieure à 0,8 g/cm.

11. Procédé pour la fabrication de la pellicule à base de polyoléfine selon la revendication 1, caractérisé en ce que les masses fondues correspondant aux couches individuelles de la pellicule sont coextrudées à travers une filière plate, la feuille coextrudée est refroidie pour la solidification, la feuille est étirée biaxialement à un rapport d'étirage longitudinal de 4:1 à 7:1 et à un rapport d'étirage transversal de 8:1 à 10:1, la pellicule étirée biaxialement est thermofixée, traitée par effet couronne sur la face qui ne contient pas de polydialkylsiloxane incorporé, et ensuite enroulée, le recouvrement par le polydialkylsiloxane sur la face externe, qui ne contient pas de polydialkylsiloxane incorporé, se produisant lors du contact des deux couches de soudure.

12. Utilisation de la pellicule à base de polyoléfine selon les revendications 1 à 10, en tant que pellicule d'emballage sur des machines d'emballage à grande vitesse.